**Europäisches Patentamt**

**European Patent Office**

**Office européen des brevets**

(19)

(11) Veröffentlichungsnummer: **0 381 911**
**A1**

# EUROPÄISCHE PATENTANMELDUNG

(12)

(21) Anmeldenummer: 89810087.0

(22) Anmeldetag: 02.02.89

(51) Int. Cl.5: **B60R 7/02, B60P 7/08**

(43) Veröffentlichungstag der Anmeldung:
**16.08.90 Patentblatt 90/33**

(84) Benannte Vertragsstaaten:
**AT BE CH DE ES FR GB GR IT LI LU NL SE**

(71) Anmelder: **REMED VERLAGS AG**
**Untermühleweg 7 Fach 2017**
**CH-6302 Zug(CH)**

(72) Erfinder: **Vautier, Michel**
**Aeschbach 493**
**CH-9432 Platz (Walzenhausen)(CH)**

(74) Vertreter: **Utiger, Heinrich, Prof. Dr. phil.**
**David Hessweg 16 Postfach 145**
**CH-8060 Zürich(CH)**

(54) **Befestigungsvorrichtung und -verfahren für lose Gegenstände in Transportmitteln.**

(57) Ein Band (4) wird aus einem selbstspannenden Aufwikkler (1) um den zu transportierenden Gegenstand (8) gewickelt und das Ende des Bandes (4) wird mittels eines Befestigungsbolzens (5) in einer Ausnehmung (7) in einer Grundplatte (6) befestigt. Der selbstspannende Aufwickler (1) ist in derselben Grundplatte (6) mit einem ähnlichen Befestigungsbolzen (2) fixiert. Im dargestellten Beispiel sind als Schnellverbindungsmittel der Befestigungsbolzen (2 und 5) in der Grundplatte (6) Bajonettverschlüsse verwendet. Diese Anordnung sichert die Lage des transportierten Gegenstandes (8) und schützt den Gegenstand vor Beschädigung. Die Anordnung ist vor allem für Automobile geeignet, sie kann jedoch auch in anderen Transportmitteln, wie Flugzeugen oder Schiffen, verwendet werden. Ein weiterer Vorteil ist darin zu erblicken, dass bei einer schnellen Aenderung der Transportgeschwindigkeit keine Verschiebung der zu transportierenden Gegenstände passieren und somit auch keine Verlagerung des Schwerpunktes einen Unfall verursachen kann.

EP 0 381 911 A1

Fig.1

# Befestigungsvorrichtung und - verfahren für lose Gegenstände in Transportmitteln.

In verschiedenen Transportmitteln, vor allem in den Automobilen, werden sehr oft empfindliche Gegenstände transportiert, die jedoch selbstverständlich während der Fahrt nicht beschädigt werden sollen. Solche Gegenstände sind z.B. Topfblumen, volle Einkaufstaschen oder Schachteln mit empfindlichem Inhalt, wie z.B. Torten, Glaswaren, technische Messgeräte. Bisher waren derartige Gegenstände entweder nur auf den Boden des Transportraumes gestellt oder eventuell zusätzlich mit anderen zu transportierenden Gegenständen gegenseitig so abgestützt, dass das Gleiten der Gegenstände in den Kurven oder beim Bremsen nicht möglich sein sollte. Diese Art ist jedoch kompliziert und garantiert die Unbeschädlichkeit der Gegenstände während des Transportes nicht.

Die Aufgabe der vorliegenden Erfindung ist, die Nachteile des Bekannten zu beseitigen und eine Schnellbefes tigungsvorrichtung und ein Schnellbefestigungsverfahren für lose Gegenstände in Transportmitteln zu schaffen, welche mit einfachen Mitteln und schnell die Lage der Gegenstände fixieren und somit die Beschädigung dieser Gegenstände während des Transports verhindern können.

Die vorgenannte Aufgabe wird dadurch gelöst, dass wenigstens ein selbstspannender Aufwickler eines Bandes und wenigstens ein am Ende des Bandes angeordneter Befestigungsbolzen mit ersten Teilen der Schnellverbindungsmittel versehen sind und dass für diese wenigstens zwei erste Teile der Schnellverbindungsmittel entsprechende zweite Teile der Schnellverbindungsmittel in einer oder mehreren Grundplatten ausgebildet sind. Diese Schnellverbindungsvorrichtung ermöglicht, mit dem aus dem selbstspannenden Aufwickler teilweise herausgezogenen Band den Gegenstand zu umwickeln oder das Band durch eine oder mehrere Oeffnungen des zu transportierenden Gegenstandes durchzuziehen und das lose Ende des Bandes wieder in der Grundplatte zu fixieren. In den meisten Fällen liegt die Grundplatte auf dem Boden des Lagerraumes, sie kann jedoch auch an den Seitenwänden oder senkrecht zum Boden angeordnet sein. In einigen Fällen erleichtert diese Art das Befestigen. Das Band kann als ein Textil- oder Kunststoffband ausgebildet sein, es kann auch elastisch sein, wobei sich die Elastizität des Bandes mit der Selbstspannung des Aufwicklers summiert. Für schwere Gegenstände können selbstverständlich auch elastische Bänder aus Metallstreifen oder aus Metallfasern verwendet werden. Das Fixieren der Gegenstände verhindert, dass sich bei einer raschen Geschwindigkeits- und Fahrtrichtungsänderung die Gegenstände und somit der Schwerpunkt verschieben können.

Nach einer zweckmässigen Ausführungsform sind die ersten Teile der Schnellverbindungsmittel als längliche Er-Erweiterungen von Bajonettverschlüssen und die zweiten Teile der Schnellverbindungsmittel als korrespondierende Abstützflächen für diese länglichen Erweiterungen in Ausnehmungen in der Grundplatte ausgebildet. Diese beispielsweise Weiterbildung ist konstruktiv sehr einfach, sie hat sich in der Praxis bewährt und der zu transportierende Gegenstand kann sehr schnell auf der Grundplatte fixiert werden.

Nach einer zweckmässigen Variante sind die ersten Teile der Schnellverbindungsmittel als Ansteckbolzen ausgeführt und die zweiten Teile der Schnellverbindungsmittel als Löcher mit einem konstanten, dem Profil der Ansteckbolzen entsprechenden Profil in der Grundplatte ausgebildet. Diese Lösung ist äusserst einfach und die Ansteckbolzen halten in den Löchern nur infolge der Reibung. Zweckmässig werden die Bolzen aus Kunststoff hergestellt, wobei selbstverständlich an sich bekannte Materialien wie Holz oder Metall, auch in Frage kommen. Es sind auch konische Formen der Ansteckbolzen und der Löcher denkbar.

Bei der letztgenannten Variante ist es vorteilhaft, wenn die Ansteckbolzen und/oder die Löcher in der Grundplatte mit die Reibungskraft erhöhenden und die Gegenfläche kontaktierenden Blattfedern versehen sind. Die Blattfedern können aus länglichen gebogenen Federn ausgebildet sein, und es besteht die Möglichkeit, dass sie von Hand beim Einstecken oder beim Herausnehmen der Bolzen zusammengedrückt werden können, womit ihre Reibungskraft vermindert wird. Diese Blattfedern können auch in ihrem nicht von Hand zusammengedrückten Zustand in Ausnehmungen in die Gegenflächen eingreifen, womit die Haltekraft der Ansteckbolzen in der Grundplatte wesentlich erhöht wird.

Es ist vorteilhaft, wenn die Grundplatte aus mehreren Teilplatten mit Hilfe von an sich bekannten Verbindungen, wie Nuten oder Falzen, zusammengesetzt ist, Diese konstruktive Ausführungsform ermöglicht, die Grundplatte in zerlegtem Zustand zu transportieren und an der Stelle, wo die Grundplatte verwendet werden soll, sie im gewünschten Umfang der Transportfläche oder dem zu transportierenden Gegenstand anzupassen. Es ist selbstverständlich, dass die Grundplatte zusätzlich der Ladefläche, z.B. durch Zuschneiden, angepasst werden kann. Als Verbindungsmittel werden an sich bekannte Verbindungen verwendet, wobei die Nuten oder Falze sehr einfach sind und ein ausreichendes Zusammenhalten der Teilplatten sichern.

Nach einer vorteilhaften Weiterentwicklung ist der selbstspannende Aufwickler mit einem Fixierbügel für das Band versehen. Nach dem Umwikkeln und Plazieren des zu transportierenden Gegenstandes wird das Band um diesen Fixierbügel geführt, so dass es nicht in Folge eines Zuges nach aussen gleiten kann.

Nach einer vorteilhaften Variante ist der selbstspannende Aufwickler als ein blockierbarer Aufwickler hergestellt. Die an sich bekannte Blockierung eines selbstspannenden Aufwicklers, z.B. mittels eines kippbaren Bolzens, verhindert ein unwillkommenes Herausziehen des Bandes aus dem Aufwickler während des Transportes.

Gemäss einer zweckmässigen Ausführungsform ist der selbstspannende Auwickler drehbar mit dem Befestigungsbolzen verbunden. Somit wird eine Einstellung der Richtung des Aufwicklers entsprechend dem Wunsch während der Befestigung des zu transportierenden Gegenstandes gesichert.

Das Verfahren zur Befestigung von losen Gegenständen in Transportmitteln mit der erfindungsgemässen Vorrichtung wird so realisiert, dass der selbstspannende Aufwickler in eine Ausnehmung der Grundplatte befestigt wird, dass mit einem, aus dem selbstspannenden Aufwickler herausgezogenen Teil des Bandes der zur befestigende Gegenstand umwickelt wird und dass das äussere Ende des Bandes mit dem Befestigungsbolzen mit dem Schnellverbindungsmittel in einer Ausnehmung in der Grundplat te befestigt wird, In dieser Formulierung wurden die Verfahrensschritte in einer zweckmässigen, jedoch nicht notwendigen Reihenfolge, genannt. Es ist selbstverständlich, dass der zu transportierende Gegenstand z.B. ausserhalb eines Autokofferraumes mit dem Band umwickelt werden kann und erst dann in den Kofferraum auf die Grundplatte gestellt, wobei danach der selbstspannende Aufwickler und der Befestigungsbolzen des äusseren Endes des Bandes in der Grundplatte fixiert werden. Auch andere Reihenfolgen der beschriebenen Verfahrensschritte sind möglich.

Zweckmässig wird der selbstspannende Aufwickler in der Ausnehmung der Grundplatte blokkiert. Dies kann mit an sich bekannten Mitteln, z.B. mit Schrauben, Federn oder Bolzen, durchgeführt werden. Somit wird z.B. für einen Zeitabschnitt, in dem nur Topfblumen transportiert werden, ein oder mehrere selbstspannende Aufwickler in bestimmten Abständen in der Grundplatte fixiert, so dass später nur die Blumentöpfe umwickelt und die Befestigungsbolzen der äusseren Enden der Bänder in der Grundplatte befestigt werden.

Es wird auch eine Rundloch-Perforierung vorgesehen, wobei auf den Drehmechanismus am Würfel verzichtet wird. Am Würfel können auch Schnapp-Steck-Bolzen vorgesehen werden und ebensolche am Ende des Bandes. Das Band kann auch mit einem Band-Fixier-Schieber versehen sein und die Grundplatte kann mit einer Antirutschmatte belegt sein.

Die vorliegende Erfindung wird anhand von einigen Zeichnungen näher erläutert.

In den Zeichnungen sind alle für die Erklärung der Erfindung nicht notwendigen Teile, wie z.B. Verbindungsschrauben, Klebestellen, nicht dargestellt worden. Gleiche Teile sind in allen Figuren mit denselben Bezugsziffern versehen.

Es zeigen:

Fig. 1 eine beispielsweise Vorderansicht der erfindungsgemässen Schnellverbindungsvorrichtung, wobei die Grundplatte wegen der Anschaulichkeit im Schnitt dargestellt ist und als der zu transportierende Gegenstand ein Blumentopf mit einer Pflanze gezeigt ist,

Fig. 2 die Vorderansicht des selbstspannenden Aufwicklers gemäss der Fig. 1 mit dem Befestigungsbolzen des äusseren Endes des Bandes, ebenfalls gemäss der Fig. 1,

Fig. 3 eine Seitenansicht von links auf den selbstspannenden Aufwickler gemäss den Figuren 1 und 2,

Fig. 4 den selbstspannenden Aufwickler gemäss der Fig. 1, bei dem der abnehmbare Gehäuseteil entfernt ist,

Fig. 5 eine Ansicht von unten auf die Ausführungsform gemäss der Fig. 3 in Richtung des Pfeils V,

Fig. 6 eine beispielsweise Grundplatte, die mit den Ausnehmungen versehen ist und aus vier zusammengesetzten Teilplatten besteht,

Fig. 7 eine beispielsweise Verbindungsart der Teilplatten mit Hilfe von Nuten und Rippen, im Schnitt gezeichnet,

Fig. 8 eine andere beispielsweise Verbindungsart mit Hilfe von schwalbenschwanzartigen Falzen, in Draufsicht dargestellt,

Fig. 9 den Schnitt IX - IX durch den abnehmbaren Gehäuseteil gemäss der Fig. 2,

Fig.10 einen vertikalen axialen Schnitt durch den selbstspannenden Aufwickler gemäss Fig. 2, wobei der abnehmbare Gehäuseteil entfernt ist,

Fig. 11 eine Vorderansicht auf den Befestigungsbolzen des äusseren Endes des Bandes, wobei der zuständige Teil der Grundplatte im Schnitt dargestellt ist, und

Fig. 12 eine Seitenansicht auf den Befestigungsbolzen aus der Fig. 11.

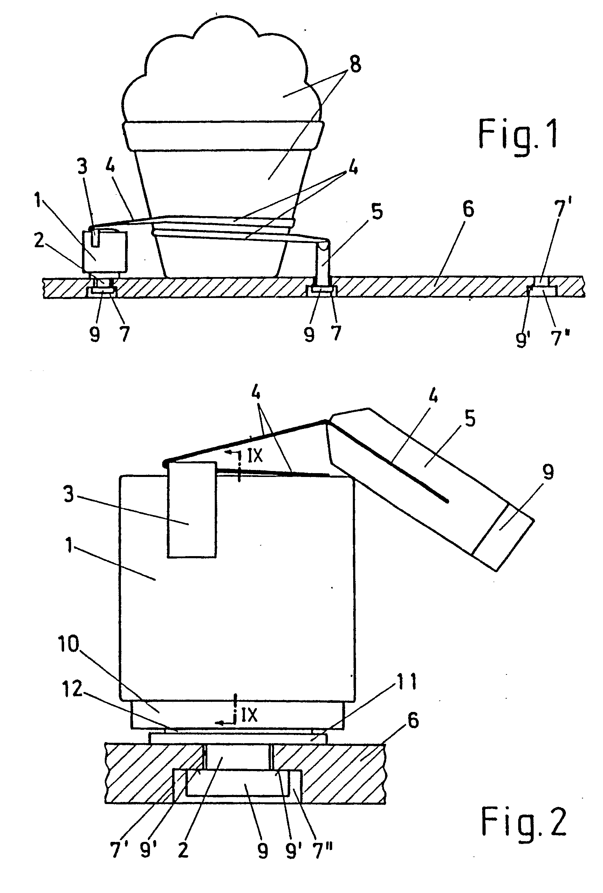

Gemäss der Figur 1 ist ein Selbstspannender Auf -wickler 1 mit einem Befestigungsbolzen 2 und mit einem Fixierbügel 3 versehen, Dieser Fixierbügel 3 weist eine rauhe untere Fläche 3' auf, die zur Fixierung eines Bandes 4 dient. Die Fixierung kann aber auch durch einen Bandfixierschieber erfolgen. Ein Befestigungsbolzen 5 dient zur Halterung des äusseren Endes des Bandes 4 und ist mit zwei Abschrägungen 5′ versehen. Eine Grundplatte 6, die zweckmässig aus mehreren, in der Figur 1 nicht gezeigten Teilplatten 6′ besteht, ist mit Ausnehmungen 7 versehen. In diesem Beispiel besteht jede Ausnehmung 7 aus einer länglichen Ausnehmung 7′ und einer zylindrischen Ausnehmung 7″. Die Ausnehmung 7 kann aber auch aus einer Rundlochperforierung bestehen, was bewirkt, dass der Drehmechanismus am Aufwickler 1 wegfällt. Die Grundplatte 6 kann zweckmässig auf ihrer oberen und/oder unteren Fläche mit einem erhöhten Reibungskoeffizienten ausgebildet sein. Ein zu transportierender Gegenstand 8 ist in der Figur 1 als ein Blumentopf mit einer Pflanze veranscheulicht. An den En den der Befestigungsbolzen 2 der selbstspannenden Aufwickler 1 und der Befestigungsbolzen der äusseren Enden der Bänder 4 sind Schnellverbindungsmittel 9,9′ ausgebildet, die in dem gezeigten Beispiel aus je einer länglichen Erweiterung 9 der genannten Befestigungsbolzen und aus entsprechend en Abstützflächen 9′, in den Ausnehmungen 7 bestehen und zusammen eine einfache Art eines Bajonettverschlusses bilden. Es ist auch vorgesehen, die Befestigungsbolzen 2 am Aufwickler 1 als Schnapp-Steckbolzen zu gestalten, was den Vorteil einer einfacheren Handhabung gewährleistet, wobei der Schnapp-Steckbolzen am Ende des Schnellverbindungsmittels 9 vorgesehen ist.

Die Figur 2 zeigt, dass das äussere Ende des Bandes 4 in einem Einschnitt im Befestigungsbolzen 5 eingeklebt ist. Auf diese Art und Weise wurde eine sehr gute Fixierung des Bandes im Befestigungsbolzen 5 erreicht. Der selbstspannende Aufwickler 1 ist auf einer Tragscheibe 10 befestigt, die über einen scheibenförmigen Verbindungskörper 12 mit dem Befestigungsbolzen verbundne ist. Unter der Tragscheibe 10 ist eine ringförmige Unterlage 11 angeordnet. Daraus folgt, dass der selbstspannende Aufwickler 1 mit dem Befestigungsbolzen 2 und somit auch mit seiner länglichen Erweiterung 9 fest verbunden ist und dass sich beim Drehen des selbstspannenden Aufwicklers 1 auch die längliche Erweiterung 9 dreht. Diese Eigenschaft ermöglicht die gewünschte Funktion und ist besser, als bei einem Bajonettverschluss.

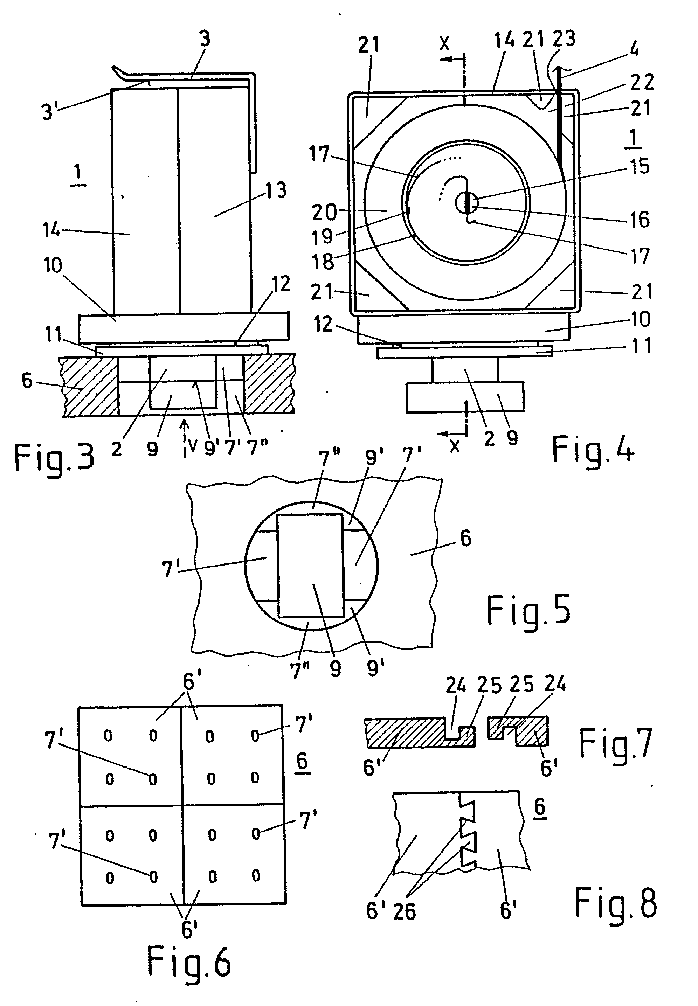

Gemäss der Figur 3 besteht das Gehäuse des selbstspannenden Aufwicklers 1 aus einem abnehmbaren Gehäuseteil 13 und einem festen Gehäuseteil 14. In dieser Figur ist auch die rauhe Fläche 3′ des Fixierbügels 3 bezeichnet. Die übrigen Teile wurden schon anhand der Figur 1 und 2 beschrieben.

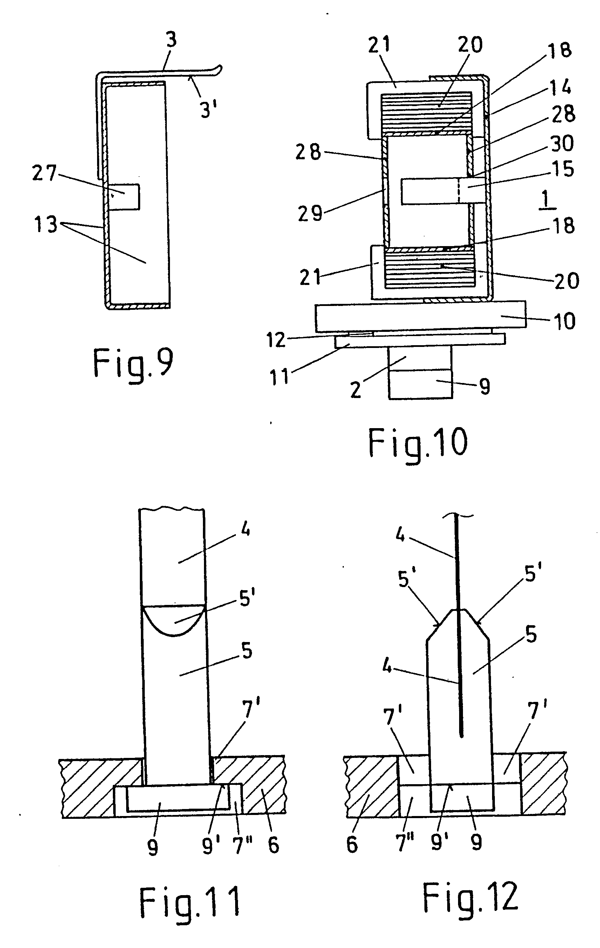

Die Figur 4 zeigt das Innere des selbstspannenden Aufwicklers 1 bei entferntem Gehäuseteil 13. In der Mitte befindet sich eine hintere Welle 15, die mit einem Schlitz 16 versehen ist, der als Halterung eines Endes einer spiralartig gewickelten Blattfeder 17 dient. Eine Spule 19 trägt das gewickelte Band 4, das jedoch wegen der Uebersichtlichkeit nicht im Detail dargestellt, sondern mit der Bezugsziffer 20 versehen ist. Ebenfalls ist die spiralartig gewickelte Blattfeder 17 wegen der Uebersichtlichkeit nur mit Hilfe von ihren Enden vereinfacht gezeigt. Das eine Ende ist im Schlitz 16 eingeklemmt, das andere in der Stelle 19 mit der Spule 18 verbunden. In den Ecken des festen Gehäuseteils 14 sind vier Distanzkörper 21 gezeigt, deren Länge später anhand der Figur 10 besser sichtbar sein wird. In einem Distanzkörper 21 ist ein Spalt 22 für das Band 4 ausgebildet. Der Spalt 22 kontaktiert die Schlitze 23 in bei den Gehäuseteilen 13, 14, so dass das Band ohne Schwierigkeiten aus dem Gehäuse 13, 14 herausgezogen werden kann.

Figur 4 zeigt das Innere des selbstspannenden Aufwikklers 1 bei entferntem Gehäuseteil 13. In der Mitte befindet sich eine hintere Welle 15, die mit einem Schlitz 16 versehen ist, der als Halterung eines Endes einer spiralartig gewickelten Blattfeder 17 dient. Eine Spule 18 trägt das gewickelte Band 4, das jedoch wegen der Uebersichtlichkeit nicht im Detail dargestellt, sondern lediglich mit der Bezugsziffer 20 versehen ist.

Ebenfalls ist die spiralartig gewickelte Blattfeder 17 wegen der Uebersichtlichkeit nur mit Hilfe von ihren Enden vereinfacht gezeigt. Das eine Ende ist im Schlitz 16 eingeklemmt, das andere in der Stelle 19 mit der Spule 18 verbunden. In den Ecken des festen Gehäuseteils 14 sind vier Distanzkörper 21 gezeigt, deren Länge später anhand der Figur 10 besser sichtbar sein wird. In einem Distanzkörper 21 ist ein Spalt 22 für das Band 4 ausgebildet. Der Spalt 22 kontaktiert die Schlitze 23 in beiden Gehäuseteilen 13, 14, so dass das Band ohne Schwierigkeit aus dem Gehäuse 13, 14 herausgezogen werden kann.

Die Figur 5 zeigt eine Ansicht von unten auf die Grundplatte 6 mit einer zylindrischen Ausnehmung 7″, einer länglichen Ausnehmung 7′, einer länglichen Erweiterung 9 des Befestigungsbolzens 2 und auf zwei Abstütz flächen 9′, die als teilweise Begrenzungsflächen der zylindrischen Ausnehmung 7″ ausgebildet sind. Die Richtung dieser Ansicht in der Figur 3 ist mit dem Pfeil V gezeigt und aus dem Vergleich der Figuren 3 und 5 ist auch die Funktion des Bajonettverschlusses gut ersuchtlich.

Gemäss Figur 6 besteht eine Grundplatte 6 aus vier Teilplatten 6′, die gegenseitig mit beliebigen Verbindungselementen verbunden sind, wie z.B. mit Rippen 25, die in die Nuten 24 eingreifen, wie das in Fig. 7 gezeigt ist. Es ist auch eine Verbindung mit einem schwalbenschwanzartigen Falz 26 gemäss der Fig. 8 möglich. In der Fig. 6 sieht man auch die beispielsweise Verteilung der Ausnehmungen 7, von welchen in dieser Draufsicht nur die länglichen Ausnehmungen 7' sichtbar sind, welche zum Einstecken der länglichen Erweiterungen 9 der Befestigungsbolzen 2 und 5 dienen. Es ist selbstverständlich, dass auch andere Formen und Verteilungen der Teilplatten 6' und der Ausnehmungen 7 in Frage kommen.

In der Figur 9 ist der vertikale axiale Schnitt IX - IX gemäss der Fig. 2 durch den abnehmbaren Gehäuseteil 13 gezeigt. Zusätzlich zu den schon beschriebenen Bestandteilen ist in dieser Figur eine vordere Welle 27 eingezeichnet.

Die Figur 10 zeigt einen vertikalen axialen Schnitt durch den selbstspannenden Aufwickler 1, in dem jedoch der in der Fig. 9 dargestellte Schnitt durch den abnehmbaren Gehäuseteil 13 nicht eingezeichnet ist. Die meisten Bestandteile der Fig. 10 sind schon beschrieben worden. Das auf der Spule 18 gewickelte Band 4 ist in dieser Figur in einem symbolischen Schnitt 20 gezeigt. Innerhalb der Spule 18 befinden sich nur vereinfacht dargestellte Lagerscheiben 28, von denen die linke in der Mitte mit einer Bohrung 29 für die vordere Welle 27 und die rechte mit einer Bohrung 30 für die hintere Welle 15 versehen sind. Die spiralartig gewickelte Blattfeder 17 ist in dieser Figur nicht dargestellt. Die Anordnung dieser Blattfeder 17 ist anschaulich in der Figur 4 dargestellt.

Eine Vorderansicht auf den Befestigungsbolzen 5 des äusseren Endes des Bandes 4 ist in Fig. 11 dargestellt. Der Befestigungsbolzen 5 ist in der Ausnehmung 7', 7" in der Grundplatte 6 eingesetzt. Die Grundplatte 6 ist im Schnitt gezeichnet. Die in Fig. 11 dargestellte Lage stellt einen verschlossenen Bajonettverschluss dar. Die länglichen Erweiterungen 9 stützen sich mit ihren oberen Flächen gegenüber den Abstützflächen 9', die sich innerhalb der zylindrischen Ausnehmung 7" befinden.

Gemäss der Fig. 12 werden die Befestigungsbolzen 5 aus der Fig. 11 in einer Seitenansicht gezeigt. Die längliche Ausnehmung 7' ist gut sichtbar, die in der Fig. 11 nur schmal erscheint. Diese längliche Ausnehmung 7 ermöglicht das Einstecken der länglichen Erweiterung 9 des Befestigungsbolzens 5 bzw. 2, und nach Drehung um 90° in beliebiger Richtung wird die Abstützung der länglichen Erweiterungen 9 gegen die Abstützflächen 9' erreicht.

Es ist einleuchtend, dass der Erfindungsgegenstand auf das Dargestellte nicht beschränkt ist. So kann man zweckmässig den Fixierbügel 3 in der Nähe des Schlitzes 23 für das Band 4 anordnen, so dass die Zugkraft des Bandes 4 keine Drehung infolge eines Drehmomentes des selbstspannenden Aufwicklers 1 verursachen kann. Das Gehäuse 13, 14 des selbstspannenden Aufwicklers kann auch rund ausgeführt werden, um schärfere Kanten zu verhindern, die die zu transportierenden Gegenstände beschädigen könnten. Ein zu transportierender Gegenstand kann auch mit zwei oder mehreren erfindungsgemässen Schnellbefestigungsvorrichtungen fixiert werden. Die meisten Teile des selbstspannenden Aufwicklers 1 können zweckmässig aus Kunststoff hergestellt werden; die stark beanspruchten Teile, wie z.B. der Fixierbügel 3, sind vorteilhaft aus Metall gefertigt.

**Ansprüche**

1. Schnellbefestigungsvorrichtung für lose Gegenstände in Transportmitteln,
dadurch gekennzeichnet,
dass wenigstens ein selbstspannender Aufwickler (1) eines Bandes (4) und wenigstens ein am Ende des Bandes (4) angeordneter Befestigungsbolzen (5) mit ersten Teilen (9) der Schnellverbindungsmittel versehen sind und dass für Diese wenigstens zwei ersten Teilen (9) der Schnellverbindungsmittel entsprechende zweite Teile (9') der Schnellverbindungsmittel in einer oder mehreren Grundplatten (6) ausgebildet sind.

2. Schnellbefestigungsvorrichtung nach Anspruch 1,
dadurch gekennzeichnet,
dass die ersten Teile (9) der Schnellverbindungsmittel als längliche Erweiterungen von Bajonettverschlüssen und die zweiten Teile (9') der Schnellverbindungsmittel als korrespondierende Abstützflächen (9') für diese länglichen Erweiterungen in Ausnehmungen (7) in der Grundplatte (6) ausgebildet sind.

3. Schnellbefestigungsvorrichtung nach Anspruch 1,
dadurch gekennzeichnet,
dass die ersten Teile (9) der Schnellverbindungsmittel als Ansteckbolzen ausgeführt sind und dass die zweiten Teile (9') der Schnellverbindungsmittel als Löcher mit einem konstanten, dem Profil der Ansteckbolzen entsprechenden Profil in der Grundplatte (6) ausgebildet sind.

4. Schnellbefestigungsvorrichtung nach Anspruch 3,
dadurch gekennzeichnet,
dass die Ansteckbolzen und/oder die Löcher in der Grundplatte (6) mit die Reibungskraft ererhöhenden und die Gegenfläche kontaktierenden Blattfedern versehen sind.

5. Schnellbefestigungsvorrichtung nach Anspruch 1,
dadurch gekennzeichnet,
dass die Grundplatte (6) aus mehreren Teilplatten (6') mit Hilfe von an sich bekannten Verbindungen, wie Nuten (24) oder Falzen (26) zusammengesetzt ist.

6. Schnellbefestigungsvorrichtung nach Anspruch 1,
dadurch gekennzeichnet,
dass der selbstspannende Aufwickler (1) mit einem Fixierbügel (3) für das Band (4) versehen ist.

7. Schnellbefestigungsvorrichtung nach Anspruch 1,
dadurch gekennzeichnet,
dass der selbstspannende Aufwickler (1) als ein blockierbarer Aufwickler ausgebildet ist.

8. Schnellbefestigungsvorrichtung nach Anspruch 1,
dadurch gekennzeichnet,
dass der selbstspannende Aufwickler (1) drehbar mit dem Befestigungsbolzen (2) verbunden ist.

9. Schnellbefestigungsvorrichtung nach Anspruch 1,
dadurch gekennzeichnet, dass die Ausnehmung (7) als Rundlochperforierung ausgebildet ist, derart, dass der Drehmechanismus am Aufwickler (1) wegfällt.

10. Verfahren zur Befestigung von losen Gegenständen in Transportmitteln mit der Vorrichtung gemäss Anspruch 1,
dadurch gekennzeichnet,
dass der selbstspannende Aufwickler (1) in eine Ausnehmung (7) der Grundplatte (6) befestigt wird, dass mit einem, aus dem selbstspannenden Aufwickler herausgezogenen Teil des Bandes (4) der zu befestigende Gegenstand (8) umwickelt wird und dass das äussere Ende des Bandes (4) mit dem Befestigungsbolzen (5) mit dem Schnellverbindungsmittel (9) in einer Ausnehmung (7) in der Grundplatte (6) befestigt wird.

11. Verfahren nach Anspruch 9,
dadurch gekennzeichnet,
dass der selbstspannende Aufwickler (1) in der Ausnehmung (7) der Grundplatte (6) blockiert wird.

Fig.1

Fig.2

Fig.3

Fig.4

Fig.5

Fig.6

Fig.7

Fig.8

Fig.9

Fig.10

Fig.11

Fig.12

| Europäisches Patentamt | **EUROPÄISCHER RECHERCHENBERICHT** | Nummer der Anmeldung |
|---|---|---|
| | | EP 89 81 0087 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 479 752 (PIAGGIO & C. SPA)<br>* Seite 4, Zeilen 3-20 *<br>--- | 1 | B 60 R 7/02<br>B 60 P 7/08 |
| A | US-A-4 475 854 (S.-O. ERICSSON)<br>* Spalte 2, Zeilen 15-20 *<br>--- | 1,2 | |
| A | FR-A-2 467 115 (C. CATTELANI)<br>* Seite 4, Zeilen 6-13; Seite 5, Zeilen 23-29 *<br>--- | 1,7 | |
| A | FR-A-2 415 026 (B. DUCOURANT)<br>* Seite 7, Zeile 30 - Seite 9, Zeile 25 *<br>--- | 1,2 | |
| A | DE-U-8 702 944 (W. GOSCH et al.)<br>* Anspruch 22 *<br>--- | 1 | |
| A | US-A-4 027 892 (J. R. PARKS)<br>* Spalte 1, Zeile 63 - Spalte 2, Zeile 3 *<br>--- | 5 | RECHERCHIERTE SACHGEBIETE (Int. Cl.5) |
| A | DE-U-7 414 667 (K. MAIER)<br>* Seite 13, Zeile 8 - Seite 14, Zeile 5 *<br>--- | 5 | B 60 P<br>B 60 R |
| A | BE-A- 870 640 (SPANSET INTER AG)<br>* Seite 8, Zeile 26 - Seite 9, Zeile 4 *<br>--- | 1 | |
| A | US-A-4 390 141 (J. H. WEBSTER)<br>* Figuren *<br>----- | 1 | |

Der vorliegende Recherchenbericht wurde für alle Patentansprüche erstellt

| Recherchenort | Abschlußdatum der Recherche | Prüfer |
|---|---|---|
| BERLIN | 13-09-1989 | STANDRING M A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)